# EUROPEAN PATENT APPLICATION

(11) **EP 2 403 238 A2**
(43) Date of publication of application: **04.01.2012**
(21) Application number: 11168709.1
(22) Date of filing: 03.06.2011
(51) Int. Cl.: H04N 5/44, H04N 5/445, H04N 21/482, H04N 21/4782

(54) **Display controlling device, display controlling method, and program**

(30) Priority: 02.07.2010 JP 2010151949
(71) Applicant: Sony Corporation, Tokyo 108-0075 (JP)
(72) Inventor: Dewa, Yoshiharu, Minato-ku, Tokyo 108-0075 (JP); Kitazato, Naohisa, Minato-ku, Tokyo 108-0075 (JP)
(74) Representative: Robinson, Nigel Alexander Julian

(57) **Abstract**

The present disclosure provides a display controlling device including: a receiving section receiving data of data broadcasting; a first display controlling section making a focus item as a predetermined item highlighted in a first display area of a display section and making an item other than the focus item normally displayed in the first display area based on the data; a second display controlling section making information corresponding to the focus item within the first display area displayed in a second display area of the display section based on the data; a selecting section selecting one of an automatic transition mode in which automatic transition of the focus item is effected and a normal mode in which the focus item is determined according to an user's operation; and a determining section determining one of a plurality of the items displayed in the first display area as the focus item.

## Description

The present disclosure relates to a display controlling device, a display controlling method, and a program, and particularly to a display controlling device, a display controlling method, and a program that enable automatic transition of a focus item of data broadcasting.

Data broadcasting has been developed to introduce an interactive function to television broadcasting.

However, the interactive function of data broadcasting is not necessarily used in all television receivers receiving data broadcasting. For example, in a case of a television receiver installed in a shop or on a street or the like, there is no operator, and thus no operation is performed even when a data broadcasting is displayed. In addition, a user unaccustomed to operation of a remote control or the like such as a senior citizen or the like has difficulty in performing various input operations, and thus often does not use the interactive function. There is thus a desire for a television receiver capable of using data broadcasting passively, for example a television receiver in which a focus item of data broadcasting makes automatic transition.

On the other hand, in related art, there is a display method in which a video display region and a text information display region are provided on a display screen, and scroll display of text information is made in the text information display region at the same time as a start of display of video in the video display region (see Japanese Patent Laid-Open No. 2001-296852, for example).

As described above, there is a desire for a television receiver in which a focus item of data broadcasting makes automatic transition.

The present disclosure has been made in view of such a situation. It is desirable to be able to effect automatic transition of a focus item of data broadcasting.

According to an embodiment of the present disclosure, there is provided a display controlling device including: a receiving section receiving data of data broadcasting; a first display controlling section making a focus item as a predetermined item highlighted in a first display area of a display section and making an item other than the focus item normally displayed in the first display area on a basis of the data; a second display controlling section making information corresponding to the focus item within the first display area displayed in a second display area of the display section on the basis of the data; a selecting section selecting one of an automatic transition mode in which automatic transition of the focus item is effected and a normal mode in which the focus item is determined according to an operation of a user; and a determining section determining one of a plurality of items displayed in the first display area as the focus item. When the automatic transition mode is selected by the selecting section, the determining section determines each of the plurality of items displayed in the first display area as the focus item in order.

According to another embodiment of the disclosure, there is provided a display controlling method to be executed by a display controlling device receiving data of data broadcasting, including:
making a focus item as a predetermined item highlighted in a first display area of a display section and making an item other than the focus item normally displayed in the first display area on a basis of the data;
making information corresponding to the focus item within the first display area displayed in a second display area of the display section on the basis of the data;
selecting one of an automatic transition mode in which automatic transition of the focus item is effected and a normal mode in which the focus item is determined according to an operation of a user; and
determining one of a plurality of the items displayed in the first display area as the focus item;
wherein when the automatic transition mode is selected, each of the plurality of the items displayed in the first display area is determined as the focus item in order.

According to further embodiment of the disclosure, there is provided a program for making a computer perform a process including:
making a focus item as a predetermined item highlighted in a first display area of a display section and making an item other than the focus item normally displayed in the first display area on a basis of data of data broadcasting;
making information corresponding to the focus item within the first display area displayed in a second display area of the display section on the basis of the data;
selecting one of an automatic transition mode in which automatic transition of the focus item is effected and a normal mode in which the focus item is determined according to an operation of a user; and
determining one of a plurality of the items displayed in the first display area as the focus item;
wherein when the automatic transition mode is selected, each of the plurality of the items displayed in the first display area is determined as the focus item in order.

According to the present disclosure, it is possible to effect automatic transition of a focus item of data broadcasting.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described with reference to the accompanying drawings, throughout which like parts are referred to by like references, and in which:
FIG. 1 is a block diagram showing an example of configuration of one embodiment of a television receiver to which the present technology is applied;
FIG. 2 is a block diagram showing an example of functional configuration of a BML browser section in FIG. 1;
FIG. 3 is a diagram showing an example of description of a BML document relating to display of an item;
FIG. 4 is a diagram showing another example of description of a BML document relating to display of an item;
FIG. 5 is a diagram showing an example of description of a BML document for controlling a focus item;
FIG. 6 is a diagram showing an example of a data broadcasting screen;
FIG. 7 is a flowchart of assistance in explaining a normal mode process by the BML browser section in FIG. 2;
FIG. 8 is a flowchart of assistance in explaining an automatic transition mode process by the BML browser section in FIG. 2;
FIG. 9 is a block diagram showing another example of functional configuration of the BML browser section in FIG. 1;
FIG. 10 is a flowchart of assistance in explaining an automatic transition mode process by the BML browser section in FIG. 9;
FIG. 11 is a diagram of assistance in explaining an example of an order of transition by the automatic transition mode process of FIG. 10;
FIG. 12 is a flowchart of assistance in explaining an automatic transition mode process by the BML browser section in FIG. 9;
FIG. 13 is a diagram of assistance in explaining an example of an order of transition by the automatic transition mode process of FIG. 12; and
FIG. 14 is a diagram showing an example of configuration of one embodiment of a computer.

### [Example of Configuration of One Embodiment of Television Receiver]

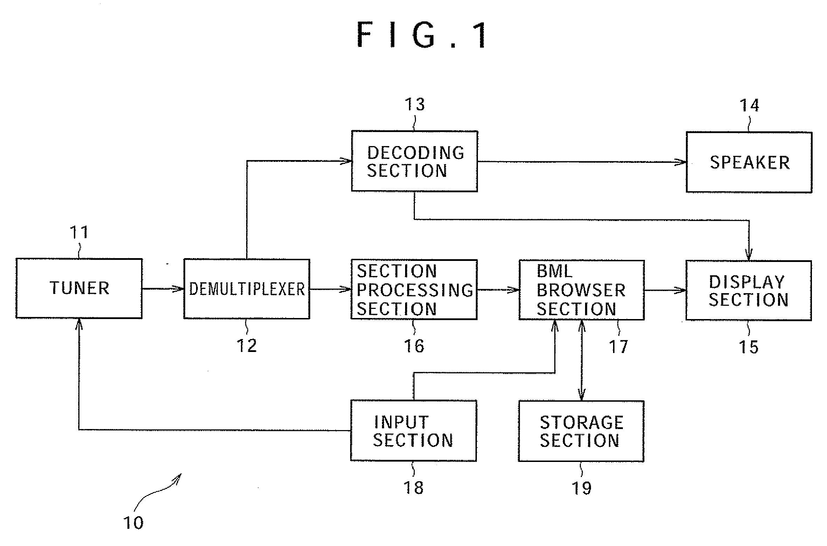

FIG. 1 is a block diagram showing an example of configuration of one embodiment of a television receiver (display controlling device) to which the present technology is applied.

The television receiver 10 in FIG. 1 includes a tuner 11, a demultiplexer 12, a decoding section 13, a speaker 14, a display section 15, a section processing section 16, a BML (Broadcast Markup Language) browser section 17, an input section 18, and a storage section 19. The television receiver 10 receives data of data broadcasting of digital broadcasting such as terrestrial digital broadcasting, BS (Broadcast Satellite) digital broadcasting, CS (Communication Satellite) digital broadcasting, or the like, and displays a data broadcasting screen on the basis of the data.

Specifically, the tuner 11 (receiving section) receives a digital broadcasting signal via an antenna not shown in the figure. The tuner 11 extracts and demodulates a digital broadcasting signal of a channel specified as a channel to be selected by a user from the received digital broadcasting signal on the basis of an operating signal supplied from the input section 18. The tuner 11 supplies a transport stream conforming to an MPEG2 (Moving Picture Experts Group phase 2) system which transport stream is obtained as a result of the extraction and demodulation to the demultiplexer 12.

The demultiplexer 12 separates the transport stream supplied from the tuner 11 into a video stream, an audio stream, and section data. The demultiplexer 12 supplies the video stream and the audio stream to the decoding section 13. In addition, the demultiplexer 12 supplies the section data to the section processing section 16.

The decoding section 13 decodes the video stream and the audio stream supplied from the demultiplexer 12, and subjects video data and audio data obtained as a result of the decoding to D/A conversion. The decoding section 13 supplies an audio signal as an analog signal obtained as a result of the D/A conversion to the speaker 14 so that audio based on the audio signal is output. In addition, the decoding section 13 supplies a video signal as an analog signal obtained as a result of the D/A conversion to the display section 15 so that video based on the video signal is displayed on the display section 15.

Incidentally, the decoding section 13 does not necessarily have to subject the video data to the D/A conversion, but may supply the video data as it is to the display section 15. In this case, the display section 15 displays video on the basis of the video data supplied from the decoding section 13.

The section processing section 16 performs various kinds of processing on the section data supplied from the demultiplexer 12. For example, the section processing section 16 performs section filtering on a DSM-CC (Digital Storage Media-Command and Control) section broadcast by a carousel system which section is included in the section data supplied from the demultiplexer 12. The section processing section 16 then analyzes a DDB (Download Data Block) obtained as a result of the section filtering. In addition, the section processing section 16 supplies data such as a BML document, image data and the like included in the DDB, which data is obtained as a result of the analysis of the DDB, in module units to the BML browser section 17.

The BML browser section 17 controls display on the display section 15 by executing a BML browser stored in the storage section 19. Specifically, the BML browser section 17 generates a video signal for a data broadcasting screen on the basis of the data in module units (which data will hereinafter be referred to as module data) supplied from the section processing section 16 and an operating signal from the input section 18. The BML browser section 17 then supplies the video signal to the display section 15, whereby the data broadcasting screen is displayed on the display section 15.

The input section 18 is for example formed by a remote control. The input section 18 receives an operation from the user, and supplies an operating signal indicating the operation to the tuner 11 and the BML browser section 17.

The storage section 19 stores the BML browser and the like.

### [Example of Functional Configuration of BML Browser Section]

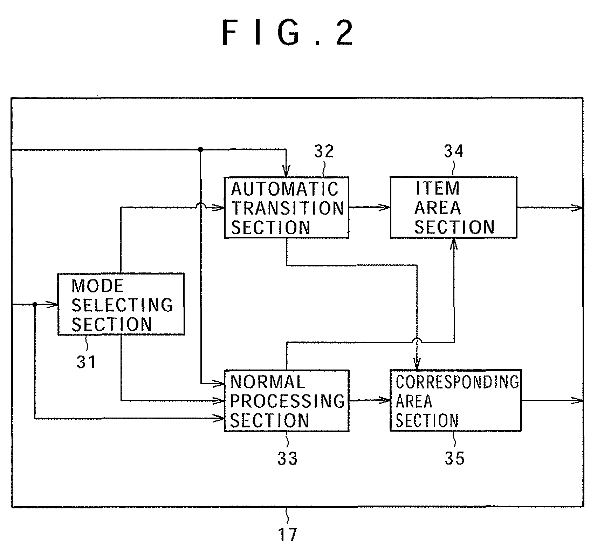

FIG. 2 is a block diagram showing an example of functional configuration of the BML browser section 17 in FIG. 1.

As shown in FIG. 2, the BML browser section 17 includes a mode selecting section 31, an automatic transition section 32, a normal processing section 33, an item area section 34, and a corresponding area section 35.

The mode selecting section 31 (selecting section) in the BML browser section 17 selects one of an automatic transition mode and a normal mode as a display mode on the basis of an operating signal supplied from the input section 18. Incidentally, the automatic transition mode refers to a mode in which a focus item, which is an item to which attention is directed within a data broadcasting screen, is changed automatically. The normal mode refers to a mode in which a focus item within a data broadcasting screen is determined according to an operation of the input section 18 by the user. The user can give an instruction to change the display mode by operating an auto-navigation button (not shown) provided to the input section 18, for example.

When the mode selecting section 31 selects the automatic transition mode as the display mode, the mode selecting section 31 supplies an enabling signal, which is a signal to enable processing, to the automatic transition section 32, and supplies a stopping signal, which is a signal to stop processing, to the normal processing section 33. When the mode selecting section 31 selects the normal mode as the display mode, on the other hand, the mode selecting section 31 supplies the enabling signal to the normal processing section 33, and supplies the stopping signal to the automatic transition section 32.

The automatic transition section 32 (determining section) automatically changes a focus item within a data broadcasting screen on the basis of the module data supplied from the section processing section 16 in a period from supply of the enabling signal by the mode selecting section 31 to supply of the stopping signal by the mode selecting section 31 (which period will be referred to as an automatic transition mode period).

Specifically, the automatic transition section 32 generates item information, which is information for displaying items on a data broadcasting screen, on the basis of the module data, and supplies the item information to the item area section 34. In addition, the automatic transition section 32 determines one of the items allowing focus thereon within the data broadcasting screen as a focus item on the basis of the module data, and supplies focus specifying information, which is information for identifying the determined focus item, to the item area section 34.

Further, the automatic transition section 32 generates corresponding information, which is information for displaying information corresponding to the focus item within the data broadcasting screen, on the basis of the module data and the focus specifying information in the automatic transition mode period. The automatic transition section 32 then supplies the corresponding information to the corresponding area section 35.

The normal processing section 33 generates item information on the basis of the module data supplied from the section processing section 16 in a period from supply of the enabling signal by the mode selecting section 31 to supply of the stopping signal by the mode selecting section 31 (which period will be referred to as a normal mode period), and supplies the item information to the item area section 34. In addition, in the normal mode period, the normal processing section 33 determines one of items allowing focus thereon within a data broadcasting screen as a focus item on the basis of an operating signal from the input section 18 and the module data from the section processing section 16. The normal processing section 33 then supplies focus specifying information for the focus item to the item area section 34.

In addition, as with the automatic transition section 32, the normal processing section 33 performs processing corresponding to the focus item on the basis of the module data from the section processing section 16 and the focus specifying information in the normal mode period. Specifically, the normal processing section 33 generates corresponding information and supplies the corresponding information to the corresponding area section 35, and generates item information for a data broadcasting screen as a transition destination and supplies the item information to the item area section 34. That is, the processing corresponding to the focus item includes processing for displaying information corresponding to the focus item in a corresponding area, processing for changing the data broadcasting screen, and the like.

The item area section 34 (first display controlling section) makes the focus item highlighted and makes the other items than the focus item normally displayed in a predetermined area within the data broadcasting screen of the display section 15 on the basis of the item information and the focus specifying information supplied from the automatic transition section 32 or the normal processing section 33.

The corresponding area section 35 (second display controlling section) displays the information corresponding to the focus item in an area other than the area in which the items are displayed within the data broadcasting screen of the display section 15 on the basis of the corresponding information supplied from the automatic transition section 32 or the normal processing section 33.

Incidentally, in the following, the area in which the items are displayed within the data broadcasting screen will be referred to as an item area (first display area), and the area in which the information corresponding to the focus item displayed in the item area is displayed will be referred to as a corresponding area (second display area).

While description in the present specification is made of the item area and the corresponding area within the data broadcasting screen, display of other than the item area and the corresponding area within the data broadcasting screen is also made on the basis of the module data.

### [Example of Description of BML Document]

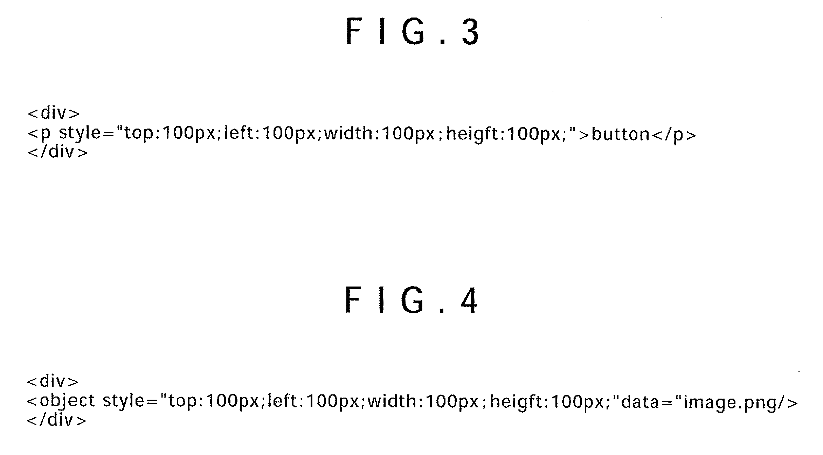

FIGS. 3 to 5 are diagrams showing an example of description of a BML document included in the module data.

FIG. 3 and FIG. 4 are diagrams showing an example of description of a BML document relating to display of an item.

As shown in FIG. 3 and FIG. 4, a BML document relating to display of an item describes information indicating a display position and display size of the item on a data broadcasting screen as well as information on image data of the item.

Specifically, in the example of FIG. 3, a number "100" of pixels from a top (top:100px) and a number "100" of pixels from a left (left:100px) are described as information indicating the display position of the item on the data broadcasting screen (display position data). In addition, a number "100" of pixels in a horizontal direction (width:100px) and a number "100" of pixels in a vertical direction (height:100px) are described as display size of the item. Further, a "button" is described as information on image data of the item.

Thus, according to the BML document of FIG. 3, the item described as "button" is displayed in a region of 100 pixels × 100 pixels which region has a position of an 100th pixel from the top of the data broadcasting screen and an 100th pixel from the left of the data broadcasting screen as an uppermost leftmost position, for example.

In the example of FIG. 4, as in the case of FIG. 3, information indicating the display position and display size of an item on a data broadcasting screen is described. Further, the file name "image" (image.png) of image data included in the module data is described as information on the image data of the item.

Thus, according to the BML document of FIG. 4, an image corresponding to the image data having the file name "image" is displayed as the item in a region of 100 pixels × 100 pixels which region has a position of an 100th pixel from the top of the data broadcasting screen and an 100th pixel from the left of the data broadcasting screen as an uppermost leftmost position, for example.

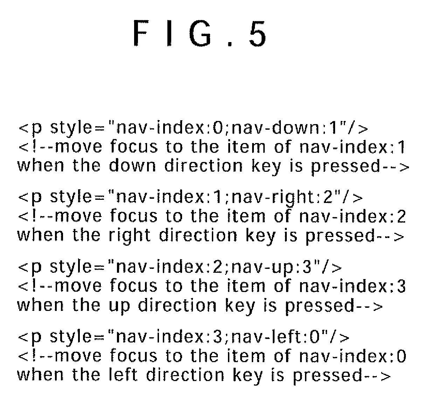

FIG. 5 is a diagram showing an example of description of a BML document for controlling a focus item.

As shown in FIG. 5, in a BML document for controlling a focus item, user operation in a case where a predetermined item is a focus item and information for identifying an item determined as focus item according to the operation are associated with each other and described as navigation information (correspondence information).

Specifically, in the example of FIG. 5, as navigation information of a navigation index "0" (nav-index:0), an operation of a down direction key provided to the input section 18 by the user in a case where an item corresponding to the navigation index "0" is a focus item and a navigation index "1" corresponding to an item determined as focus item according to the operation are described. Incidentally, navigation indexes are unique numbers given to respective pieces of navigation information.

In addition, in the example of FIG. 5, as navigation information of the navigation index "1" (nav-index:1), an operation of a right direction key provided to the input section 18 by the user in a case where an item corresponding to the navigation index "1" is a focus item and a navigation index "2" corresponding to an item determined as focus item according to the operation are described.

Further, in the example of FIG. 5, as navigation information of the navigation index "2" (nav-index:2), an operation of an up direction key provided to the input section 18 by the user in a case where an item corresponding to the navigation index "2" is a focus item and a navigation index "3" corresponding to an item determined as focus item according to the operation are described.

In addition, in the example of FIG. 5, as navigation information of the navigation index "3" (nav-index:3), an operation of a left direction key provided to the input section 18 by the user in a case where an item corresponding to the navigation index "3" is a focus item and the navigation index "0" corresponding to an item determined as focus item according to the operation are described.

Thus, according to the BML document of FIG. 5, in the case where the item corresponding to the navigation index "0" is a focus item, when the user operates the down direction key, the focus item is changed to the item corresponding to the navigation index "1." In the case where the item corresponding to the navigation index "1" is a focus item, when the user operates the right direction key, the focus item is changed to the item corresponding to the navigation index "2." In the case where the item corresponding to the navigation index "2" is a focus item, when the user operates the up direction key, the focus item is changed to the item corresponding to the navigation index "3." In the case where the item corresponding to the navigation index "3" is a focus item, when the user operates the left direction key, the focus item is changed to the item corresponding to the navigation index "0."

In addition, the navigation information describes items determined as focus item. Thus, items allowing focus thereon can be recognized by the navigation information.

### [Example of Data Broadcasting Screen]

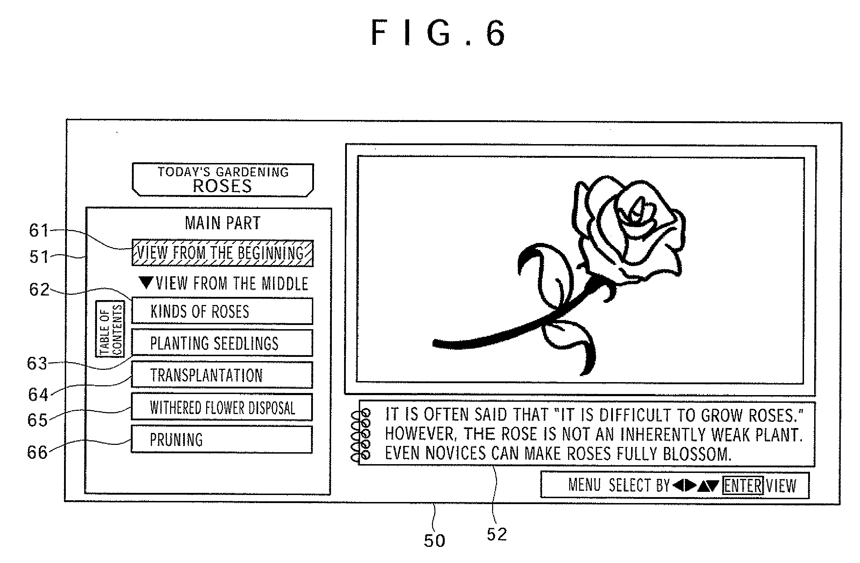

FIG. 6 is a diagram showing an example of a data broadcasting screen.

As shown in FIG. 6, the data broadcasting screen 50 includes an item area 51, a corresponding area 52 and the like.

The item area 51 displays predetermined items on the basis of a BML document relating to display of items which BML document is included in the module data. In the example of FIG. 6, six items 61 to 66 are displayed. In addition, a focus item among the items displayed in the item area 51 is highlighted. In the example of FIG. 6, the item 61 is the focus item, and the item 61 is highlighted.

The corresponding area 52 displays information corresponding to the focus item on the basis of a BML document describing a script which BML document is included in the module data. In the example of FIG. 6, because the item 61 is the focus item, information corresponding to the item 61 is displayed on the basis of a BML document describing a script to be executed when the item 61 is the focus item (which script will hereinafter be referred to as a focus script). Incidentally, the BML document describing the focus script is called by an onclick attribute or the like.

### [Description of Processes of BML Browser Section]

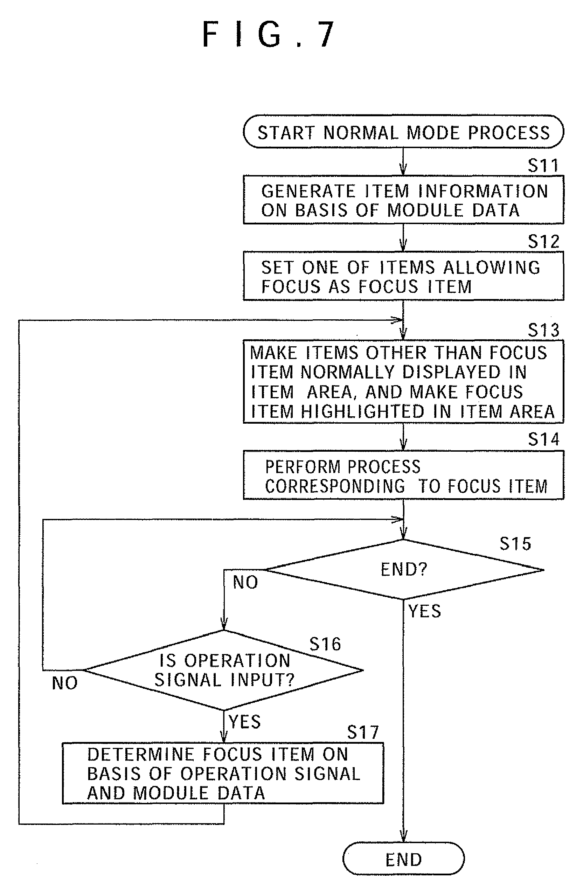

FIG. 7 is a flowchart of assistance in explaining a normal mode process by the BML browser section 17 in FIG. 2. This normal mode process is started when an enabling signal is supplied from the mode selecting section 31 to the normal processing section 33.

In step S11, the normal processing section 33 generates item information for a data broadcasting screen 50 as a display object on the basis of the module data supplied from the section processing section 16.

For example, when the BML document shown in FIG. 3 is included in the module data corresponding to the data broadcasting screen 50 as a display object, the normal processing section 33 generates item information for displaying the item described as "button" in a region of 100 pixels × 100 pixels which region has a position of an 100th pixel from the top of the data broadcasting screen 50 and an 100th pixel from the left of the data broadcasting screen 50 as an uppermost leftmost position. In addition, when the BML document shown in FIG. 4 is included in the module data corresponding to the data broadcasting screen 50 as a display object, the normal processing section 33 generates item information for displaying the image corresponding to the image data having the file name "image" as an item in a region of 100 pixels × 100 pixels which region has a position of an 100th pixel from the top of the data broadcasting screen 50 and an 100th pixel from the left of the data broadcasting screen 50 as an uppermost leftmost position. The normal processing section 33 then supplies the generated item information to the item area section 34.

In step S 12, the normal processing section 33 determines one of items allowing focus thereon among items corresponding to the item information generated in step S11 as a focus item on the basis of the module data. Specifically, the normal processing section 33 determines one of items included in the navigation information of the items corresponding to the item information generated in step S11 as a focus item.

In step S 13, the item area section 34 makes the items other than the focus item displayed normally and makes the focus item highlighted in an item area 51 within the data broadcasting screen 50 of the display section 15 on the basis of the item information and focus specifying information supplied from the normal processing section 33.

In step S14, the normal processing section 33 performs processing corresponding to the focus item on the basis of a BML document describing a focus script of the focus item which BML document is included in the module data.

Specifically, when the focus script of the focus item is a script for making information corresponding to the focus item displayed in the corresponding area 52, the normal processing section 33 generates corresponding information according to the script, and supplies the corresponding information to the corresponding area section 35. The information corresponding to the focus item is thereby displayed in the corresponding area 52.

The data broadcasting screen 50 thus displays the information corresponding to the focus item when the focus item is merely determined, rather than displaying information corresponding to an item when a user clicks the item as on a Web page.

In addition, when the focus script of the focus item is a script for effecting a transition of the data broadcasting screen 50, the normal processing section 33 generates item information on the basis of a BML document relating to display of items corresponding to a data broadcasting screen 50 as a transition destination. In addition, the normal processing section 33 determines one of items allowing focus thereon among the items corresponding to the item information as a focus item. The normal processing section 33 then supplies the item information and focus specifying information for the focus item to the item area section 34. The data broadcasting screen 50 as the transition destination is thereby displayed.

In step S15, the normal processing section 33 determines whether to end the process, that is, whether a stopping signal is supplied from the mode selecting section 31. When determining that the process is not to be ended in step S15, the normal processing section 33 in step S16 determines whether an operating signal indicating a predetermined operation (for example an operation of the up, down, left, or right direction key) is input from the input section 18. When determining in step S16 that no operating signal indicating a predetermined operation is input from the input section 18, the process returns to step S15. Then, the processes of steps S 15 and S16 are repeated until a stopping signal is input from the mode selecting section 31 or until an operation signal indicating a predetermined operation is input from the input section 18.

When it is determined in step S16 that an operating signal indicating a predetermined operation is input from the input section 18, on the other hand, the process proceeds to step S 17. Then, in step S17, the normal processing section 33 determines a predetermined item within the data broadcasting screen 50 as focus item on the basis of the operation signal from the input section 18 and a BML document for controlling the focus item which BML document is included in the module data.

For example, when the operation signal from the input section 18 indicates an operation of the down direction key, the BML document for controlling the focus item on the data broadcasting screen 50 being displayed is the BML document shown in FIG. 5, and the focus item corresponds to the navigation index "0," the normal processing section 33 determines the item corresponding to the navigation index "1" as focus item. Then, the normal processing section 33 supplies focus specifying information for the focus item to the item area section 34, and returns the process to step S13. The data broadcasting screen 50 highlighting the new focus item is thereby displayed on the display section 15.

When it is determined in step S15 that the process is to be ended, the process is ended.

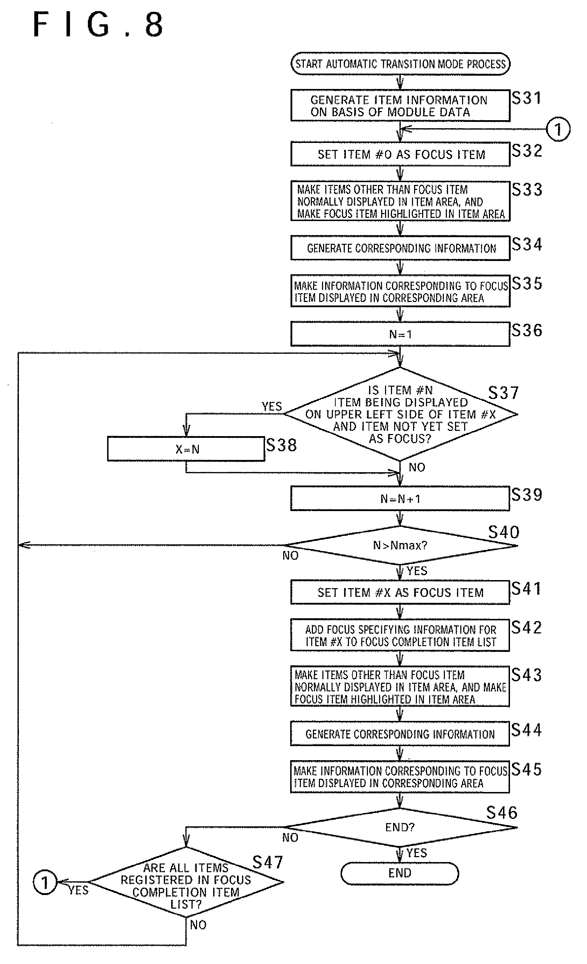

FIG. 8 is a flowchart of assistance in explaining an automatic transition mode process by the BML browser section 17 in FIG. 2. This automatic transition mode process is started when an enabling signal is supplied from the mode selecting section 31 to the automatic transition section 32.

In step S31, as in the process of the normal processing section 33, the automatic transition section 32 generates item information for a data broadcasting screen 50 as a display object on the basis of the module data supplied from the section processing section 16, and supplies the item information to the item area section 34.

In step S32, the automatic transition section 32 determines an item #0, which is the item corresponding to the navigation index "0," as a focus item on the basis of the module data, and supplies item specifying information for the focus item to the item area section 34.

In step S33, the item area section 34 makes items other than the focus item displayed normally and makes the focus item highlighted in an item area 51 within the data broadcasting screen 50 of the display section 15 on the basis of the item information and focus specifying information supplied from the automatic transition section 32.

In step S34, as with the normal processing section 33, the automatic transition section 32 generates corresponding information on the basis of a BML document describing a focus script of the focus item which BML document is included in the module data. The automatic transition section 32 then supplies the corresponding information to the corresponding area section 35.

In step S35, the corresponding area section 35 makes information corresponding to the focus item displayed in a corresponding area 52 within the data broadcasting screen 50 of the display section 15 on the basis of the corresponding information supplied from the automatic transition section 32.

Incidentally, when the focus script of the focus item which script is included in the module data is not a script for making the information corresponding to the focus item displayed in the corresponding area 52, the processes of steps S34 and S35 are skipped.

In step S36, the automatic transition section 32 sets a value N to one.

In step S37, the automatic transition section 32 determines on the basis of the module data whether an item #N corresponding to a navigation index "N" is an item being displayed on an upper left side of an item #X corresponding to a navigation index "X" and is an item on which focus is yet to be placed. Incidentally, the value X is set in step S38 to be described later. When the process of step S38 is yet to be performed, and the value X is not set, the process of step S37 is not performed, but the process proceeds to step S38.

When it is determined in step S37 that the item #N is an item being displayed on the upper left side of the item #X and is an item on which focus is yet to be placed, the process proceeds to step S38.

In step S38, the automatic transition section 32 sets the value X to the value N. The automatic transition section 32 then advances the process to step S39.

When it is not determined in step S37 that the item #N is an item being displayed on the upper left side of the item #X and is an item on which focus is yet to be placed, on the other hand, the process proceeds to step S39.

In step S39, the automatic transition section 32 increments the value N by one.

In step S40, the automatic transition section 32 determines whether the value N is larger than a navigation index maximum value Nmax. When it is determined in step S40 that the value N is not larger than the maximum value Nmax, the process returns to step S37. The processes of steps S37 to S40 are repeated until the value N becomes larger than the maximum value Nmax. The value of a navigation index corresponding to the uppermost leftmost item among items displayed within the data broadcasting screen 50 and not yet determined as focus item is set to the value X.

When it is determined in step S40 that the value N is larger than the maximum value Nmax, on the other hand, the automatic transition section 32 in step S41 determines the item #X as focus item. The automatic transition section 32 then supplies focus specifying information for the item #X to the item area section 34.

In step S42, the automatic transition section 32 adds the focus specifying information for the item #X to a focus completion item list. Incidentally, the focus completion item list is a list of focus specifying information, and is retained in the storage section 19 (FIG. 1) or the like. After the process of step S42, the process proceeds to step S43.

The processes of steps S43 to S45 are similar to the processes of steps S33 to S35 described above, and thus description thereof will be omitted.

After the process of step S45, the automatic transition section 32 in step S46 determines whether to end the process, that is, whether a stopping signal is supplied from the mode selecting section 31. When it is determined in step S46 that the process is not to be ended, the process proceeds to step S47.

In step S47, the automatic transition section 32 determines whether focus specifying information for all items allowing focus thereon within the data broadcasting screen 50 being displayed is registered in the focus completion item list on the basis of the module data and the focus completion item list.

When it is determined in step S47 that the focus specifying information for all the items allowing focus thereon within the data broadcasting screen 50 being displayed is not registered in the focus completion item list, the process returns to step S37. Then, the processes of steps S37 to S47 are repeated until a stopping signal is supplied from the mode selecting section 31 to the automatic transition section 32 or until the focus specifying information for all the items allowing focus thereon within the data broadcasting screen 50 being displayed is registered in the focus completion item list. The items allowing focus thereon within the data broadcasting screen 50 being displayed are thereby set as focus item in order from the upper left until the display mode is changed from the automatic transition mode or until all the items allowing focus thereon within the data broadcasting screen 50 being displayed have been set as focus item.

When it is determined in step S47 that the focus specifying information for all the items allowing focus thereon within the data broadcasting screen 50 being displayed is registered in the focus completion item list, on the other hand, the automatic transition section 32 deletes all the focus specifying information registered in the focus completion item list. The process then returns to step S32. Thereby, the item #0 is set as focus item again, and thereafter the items allowing focus thereon within the data broadcasting screen 50 being displayed are set as focus item in order from the upper left.

When determining in step S46 that the process is to be ended, the automatic transition section 32 deletes all the focus specifying information registered in the focus completion item list, and ends the process.

Incidentally, while the automatic transition mode process of FIG. 8 sets the items allowing focus thereon within the data broadcasting screen 50 being displayed as focus item in order from the upper left, the order in which the items allowing focus thereon within the data broadcasting screen 50 being displayed are set as focus item is not limited to this. Because the BML document relating to display of items describes information indicating display positions, the transition of the focus item can be effected in order of the display positions.

In addition, the transition of the focus item may be made at each predetermined time (for example five minutes and 10 minutes). In this case, the transition intervals may be for example set by an operation of the input section 18 by the user or set in advance.

As described above, when the automatic transition mode is selected as a display mode, the television receiver 10 determines items within the data broadcasting screen 50 being displayed as focus item in order, and displays information corresponding to the focus item in the corresponding area 52. The user can thereby view information corresponding to each item of data broadcasting by merely switching the display mode to the automatic transition mode by operating the auto-navigation button of the input section 18 or the like.

As a result, even a user such as a senior citizen or the like unaccustomed to operation of a remote control or the like can view information corresponding to each item of data broadcasting. In addition, even when the television receiver 10 is installed in a shop or on a street or the like and no operator is present, information corresponding to each item of data broadcasting can be displayed. Thus, the convenience of the user is improved.

### [Another Example of Functional Configuration of BML Browser Section]

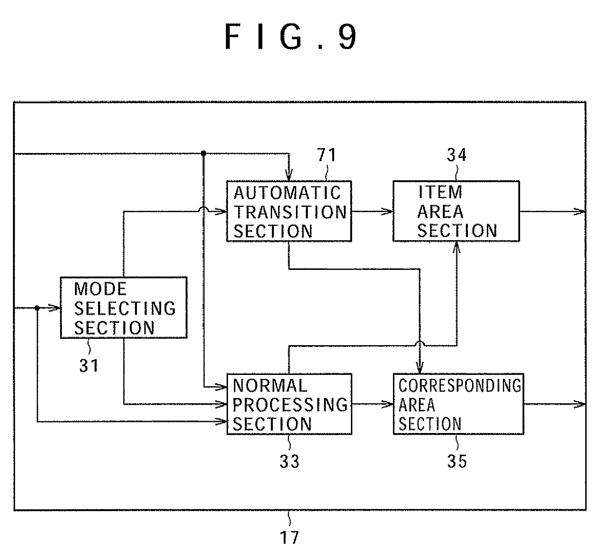

FIG. 9 is a block diagram showing another example of functional configuration of the BML browser section 17 in FIG. 1.

Of constituent elements shown in FIG. 9, the same constituent elements as in the configuration of FIG. 2 are identified by the same reference numerals. Repeated description will be omitted as appropriate.

The configuration of the BML browser section 17 in FIG 9 is different from the configuration in FIG. 2 principally in that an automatic transition section 71 is provided in place of the automatic transition section 32. When the display mode is the automatic transition mode, the BML browser section 17 effects automatic transitions of not only the focus item but also the data broadcasting screen.

Specifically, in an automatic transition mode period, the automatic transition section 71 in the BML browser section 17 effects automatic transition of the focus item within the data broadcasting screen 50 or the data broadcasting screen 50 on the basis of the module data supplied from the section processing section 16.

More specifically, the automatic transition section 71 determines the data broadcasting screen 50 as a display object on the basis of the module data. Then, the automatic transition section 71 generates item information for the data broadcasting screen 50 as a display object on the basis of the module data, and supplies the item information to the item area section 34. In addition, the automatic transition section 71 determines one of items allowing focus thereon within the data broadcasting screen 50 as a display object as a focus item on the basis of the module data, and supplies focus specifying information for the determined focus item to the item area section 34.

Further, in the automatic transition mode period, the automatic transition section 71 generates corresponding information on the basis of the module data and the focus specifying information, and supplies the corresponding information to the corresponding area section 35.

### [Description of Process of BML Browser Section]

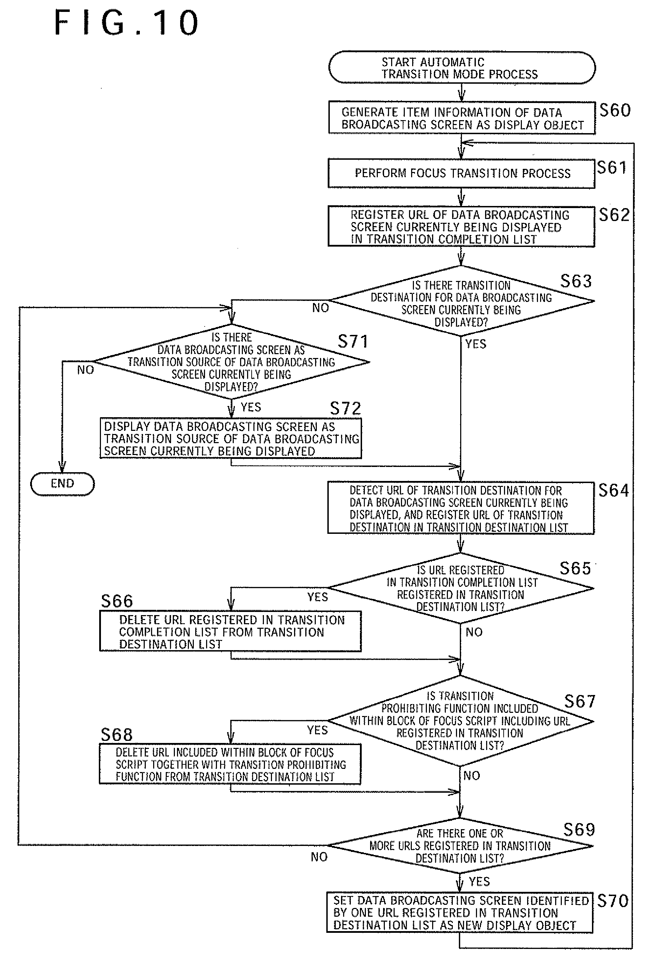

FIG. 10 is a flowchart of assistance in explaining an automatic transition mode process by the BML browser section 17 in FIG. 9. This automatic transition mode process is started when an enabling signal is supplied from the mode selecting section 31 to the automatic transition section 71.

In step S60, the automatic transition section 71 determines a data broadcasting screen 50 as a display object on the basis of the module data supplied from the section processing section 16, and generates item information for the data broadcasting screen 50. The automatic transition section 71 then supplies the generated item information to the item area section 34.

In step 861, the automatic transition section 71 performs a focus transition process for effecting transition of a focus item within the data broadcasting screen 50 as a display object. In this focus transition process, the processes of steps S32 to S45 in FIG. 8 are performed, and thereafter the process of step S47 in FIG. 8 is performed. When it is determined in step S47 that focus specifying information for all items allowing focus thereon within the data broadcasting screen 50 being displayed is registered in the focus completion item list, the focus transition process is ended unlike the case of FIG. 8. When it is determined in step S47 that the focus specifying information for all the items allowing focus thereon within the data broadcasting screen 50 being displayed is not registered in the focus completion item list, the process returns to the process of step S37 as in FIG. 8.

In step S62, the automatic transition section 71 registers the URL (Uniform Resource Locator) of the data broadcasting screen 50 currently being displayed in a transition completion list on the basis of the module data. Incidentally, the transition completion list is a list of information for identifying data broadcasting screens 50 determined as display objects, and is retained in the storage section 19 (FIG. 1) or the like.

In step S63, the automatic transition section 71 determines whether there is a transition destination for the data broadcasting screen 50 currently being displayed on the basis of a BML document (screen identifying data) for identifying a screen as a display object when an item within the data broadcasting screen 50 currently being displayed is determined as a focus item, the BML document being included in the module data.

Specifically, the automatic transition section 71 determines that there is a transition destination when a URL is specified by an href attribute of an a-element of the BML document for the data broadcasting screen 50 currently being displayed which BML document is included in the module data. In addition, the automatic transition section 71 determines that there is a transition destination when a URL is specified in the focus script of an item within the data broadcasting screen 50 currently being displayed which focus script is included in the module data. More specifically, the automatic transition section 71 determines that there is a transition destination when there is a character string starting with "arib://," "http://," or "https://" or a character string including ".bml" in the focus script of the item within the data broadcasting screen 50 currently being displayed. On the other hand, the automatic transition section 71 determines that there is no transition destination when a URL is not specified by an href attribute of an a-element of the BML document for the data broadcasting screen 50 currently being displayed and when a URL is not specified in the focus script of an item within the data broadcasting screen 50 currently being displayed.

When it is determined in step S63 that there is a transition destination for the data broadcasting screen 50 currently being displayed, the process proceeds to step S64.

In step S64, the automatic transition section 71 detects the URL of the transition destination for the data broadcasting screen 50 currently being displayed, and registers the URL of the transition destination in a transition destination list.

Specifically, the automatic transition section 71 detects the URL specified by the href attribute of the a-element of the BML document for the data broadcasting screen 50 currently being displayed which BML document is included in the module data as the URL of the transition destination. In addition, the automatic transition section 71 detects the URL specified in the focus script of an item within the data broadcasting screen 50 currently being displayed which focus script is included in the module data as the URL of the transition destination. More specifically, the automatic transition section 71 detects character strings starting with "arib://," "hltp://," and "https://" as well as a character string including ".bml" in the focus script of an item within the data broadcasting screen 50 currently being displayed as the URL of the transition destination. The automatic transition section 71 then registers the detected URL of the transition destination in the transition destination list.

Incidentally, the transition destination list is a list of URLs of data broadcasting screens 50 as transition destinations for the data broadcasting screen 50 currently being displayed, and is retained in the storage section 19 (FIG. 1) or the like.

In step S65, the automatic transition section 71 determines whether a URL registered in the transition completion list is registered in the transition destination list.

When it is determined in step S65 that the URL registered in the transition completion list is not registered in the transition destination list, the process proceeds to step S67.

When it is determined in step S65 that the URL registered in the transition completion list is registered in the transition destination list, on the other hand, the automatic transition section 71 in step S66 deletes the URL registered in the transition completion list from the transition destination list, and then advances the process to step S67.

In step S67, the automatic transition section 71 determines whether a transition prohibiting function is included within the block of the focus script including a URL registered in the transition destination list.

Incidentally, the transition prohibiting function is a function for performing a process according to an operation of the user, and is transmitTextDataOverIP(URL, text, charset) or the like transmitTextDataOverIP() is a function for performing a process of transmitting text data to a device corresponding to the URL specified in () according to an operation of the user, and is a function performed when a result of a questionnaire or the like is transmitted via a network.

When it is determined in step S67 that the transition prohibiting function is not included within the block of the focus script including the URL registered in the transition destination list, the process proceeds to step S69.

When it is determined in step S67 that the transition prohibiting function is included within the block of the focus script including the URL registered in the transition destination list, on the other hand, the process proceeds to step S68.

In step S68, the automatic transition section 71 deletes the URL included within the block of the focus script together with the transition prohibiting function from the transition destination list. The automatic transition section 71 then proceeds to step S69.

In step S69, the automatic transition section 71 determines whether one or more URLs are registered in the transition destination list.

When it is determined in step S69 that one or more URLs are registered in the transition destination list, the process proceeds to step S70. In step S70, the automatic transition section 71 sets a data broadcasting screen 50 identified by one URL registered in the transition destination list as a new display object. Then, the automatic transition section 71 generates item information for the data broadcasting screen 50 as the new display object, and supplies the item information to the item area section 34, as in the process of step S60. The automatic transition section 71 returns the process to step S61.

Then, the processes of steps S61 to S70 are repeated until no URL is registered in the transition destination list. Thereby, the data broadcasting screen 50 continues transition until there is no data broadcasting screen 50 as a transition destination, and a focus item within the data broadcasting screen 50 makes transition each time the data broadcasting screen 50 makes a transition.

When it is determined in step S63 that there is no transition destination for the data broadcasting screen 50 currently being displayed, or when it is determined in step S69 that one or more URLs are not registered in the transition destination list, on the other hand, the process proceeds to step S71.

In step S71, the automatic transition section 71 determines whether there is a data broadcasting screen 50 as a transition source of the data broadcasting screen 50 currently being displayed on the basis of the module data.

When it is determined in step S71 that there is a data broadcasting screen 50 as a transition source of the data broadcasting screen 50 currently being displayed, the process proceeds to step S72. In step S72, the automatic transition section 71 sets the data broadcasting screen 50 as the transition source of the data broadcasting screen 50 currently being displayed as a new display object, and displays the data broadcasting screen 50 as the transition source on the basis of the module data. Then, the process proceeds to step S64, and the process from step S64 on down is performed.

Thereby, when there is no data broadcasting screen 50 to which to make a transition from the data broadcasting screen 50 currently being displayed, and when the data broadcasting screen 50 currently being displayed is not a data broadcasting screen 50 first set as a display object after the start of the automatic transition mode process, the data broadcasting screen 50 displayed on the display section 15 first returns to the data broadcasting screen 50 as the transition source. Then, the data broadcasting screen 50 continues transition until there is no data broadcasting screen 50 as a transition destination for the data broadcasting screen 50 to which to make a transition from the data broadcasting screen 50, and a focus item within the data broadcasting screen 50 makes transition each time the data broadcasting screen 50 makes a transition.

When it is determined in step S71 that there is no data broadcasting screen 50 as a transition source of the data broadcasting screen 50 currently being displayed, the process is ended. That is, when there is no data broadcasting screen 50 to which to make a transition from the data broadcasting screen 50 currently being displayed, and the data broadcasting screen 50 currently being displayed is the data broadcasting screen 50 first set as a display object after the start of the automatic transition mode process, transitions to all transition destinations to which to make transition from the data broadcasting screen 50 are completed. Therefore the process is ended.

Incidentally, when it is determined in step S71 that there is no data broadcasting screen 50 as a transition source of the data broadcasting screen 50 currently being displayed, and the stopping signal is not supplied from the mode selecting section 31 to the automatic transition section 71, the process may return to step S60 without being ended. That is, the transition of the data broadcasting screen 50 and the focus item may be made until the display mode is changed from the automatic transition mode.

### [Description of Order of Transition by Automatic Transition Mode Process]

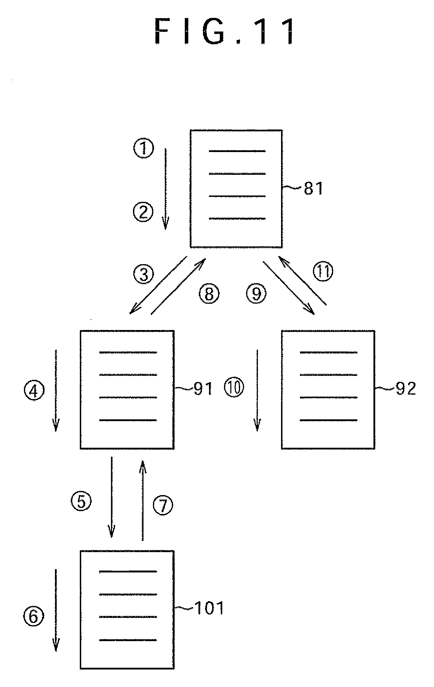

FIG. 11 is a diagram of assistance in explaining an example of an order of transition by the automatic transition mode process of FIG. 10.

Suppose that in FIG. 11, a BML document included in the module data describes the URLs of a data broadcasting screen 91 and a data broadcasting screen 92 as transition destinations for a data broadcasting screen 81, and describes the URL of a data broadcasting screen 101 as a transition destination for the data broadcasting screen 91.

In this case, according to the automatic transition mode process of FIG. 10, for example, the data broadcasting screen 81 is displayed in a first step, and a focus item within the data broadcasting screen 81 makes transition in a second step. Then, the display object makes a transition from the data broadcasting screen 81 to the data broadcasting screen 91 in a third step, and a focus item within the data broadcasting screen 91 makes transition in a fourth step. Then, the display object makes a transition from the data broadcasting screen 91 to the data broadcasting screen 101 in a fifth step, and a focus item within the data broadcasting screen 101 makes transition in a sixth step.

In this case, because there is no transition destination for the data broadcasting screen 101, the display object makes a transition from the data broadcasting screen 101 to the data broadcasting screen 91 as a transition source of the data broadcasting screen 101 in a seventh step. Then, because the transition to the data broadcasting screen 101 as a transition destination for the data broadcasting screen 91 has already been made, and there is no other transition destination for the data broadcasting screen 91, the display object makes a transition from the data broadcasting screen 91 to the data broadcasting screen 81 as a transition source of the data broadcasting screen 91 in an eighth step.

Then, because the transition to the data broadcasting screen 91 as a transition destination for the data broadcasting screen 81 has already been made, but a transition to the data broadcasting screen 92 has not yet been made, the display object makes a transition from the data broadcasting screen 81 to the data broadcasting screen 92 in a ninth step. Then, a focus item within the data broadcasting screen 92 makes transition in a tenth step. Because there is no transition destination for the data broadcasting screen 92, the display object makes a transition from the data broadcasting screen 92 to the data broadcasting screen 81 as a transition source of the data broadcasting screen 92 in an eleventh step.

As described above, according to the automatic transition mode process of FIG. 10, the focus item within the data broadcasting screen being displayed makes transition, and thereafter the data broadcasting screen makes transition. As a result, the user can view not only information corresponding to the focus item within the data broadcasting screen currently being displayed but also a data broadcasting screen to which a transition is made according to the focus item.

### [Description of Another Process of BML Browser Section]

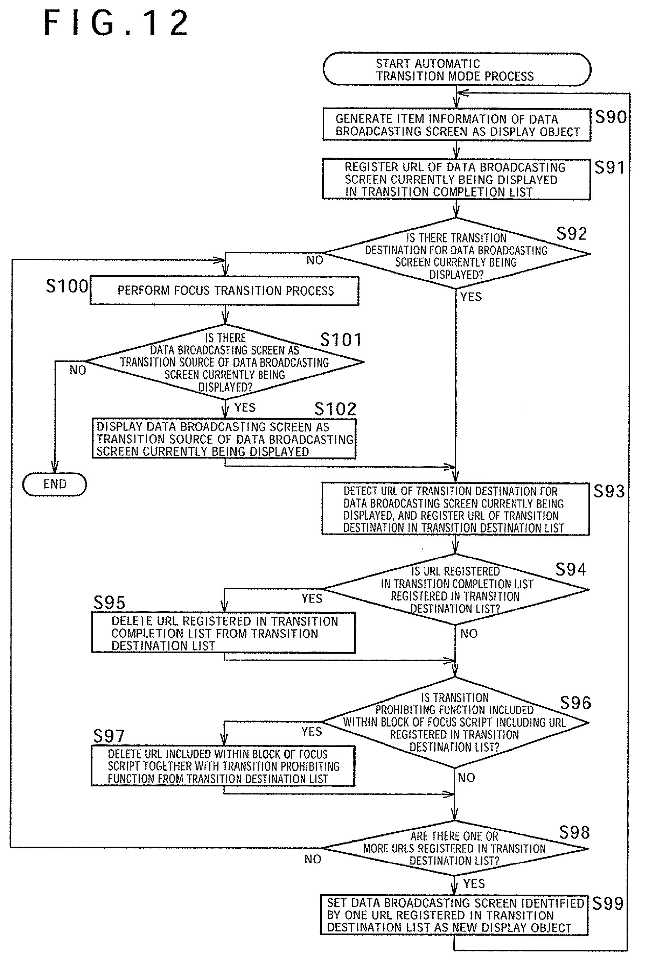

FIG. 12 is a flowchart of assistance in explaining an automatic transition mode process by the BML browser section 17 in FIG. 9. This automatic transition mode process is started when an enabling signal is supplied from the mode selecting section 31 to the automatic transition section 71.

In step S90, the automatic transition section 71 determines a data broadcasting screen 50 as a display object on the basis of the module data supplied from the section processing section 16, and generates item information for the data broadcasting screen 50. Then, the automatic transition section 71 supplies the generated item information to the item area section 34, and advances the process to step S91.

The process of steps S91 to S99 is similar to the process of steps S62 to S70 in FIG. 10, and therefore description thereof will be omitted.

When it is determined in step S92 that there is no transition destination for the data broadcasting screen 50 currently being displayed, or when it is determined in step S98 that one or more URLs are not registered in the transition destination list, on the other hand, the process proceeds to step S100.

In step S100, the automatic transition section 71 performs a focus transition process as in the process of step S61 in FIG. 10. That is, when there is no data broadcasting screen 50 to which to make a transition, a focus item within the data broadcasting screen 50 currently being displayed makes transition. After the process of step S100, the process proceeds to step S101.

The process of steps S101 and S102 is similar to the process of steps S71 and S72 in FIG. 10, and therefore description thereof will be omitted.

### [Description of Order of Transition by Automatic Transition Mode Process]

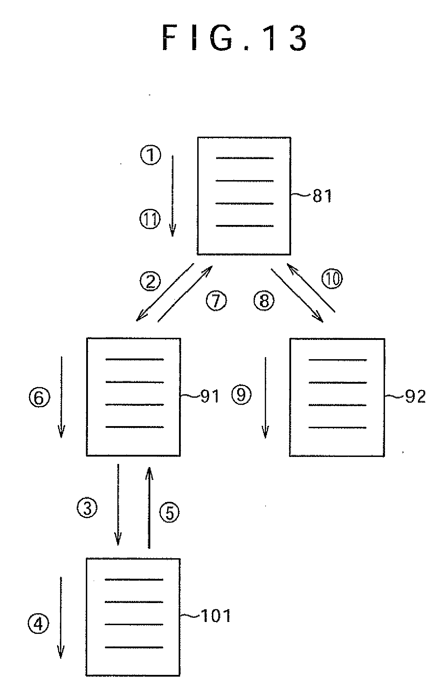

FIG. 13 is a diagram of assistance in explaining an example of an order of transition by the automatic transition mode process of FIG. 12.

Suppose that in FIG. 13, as in FIG. 11, a BML document included in the module data describes the URLs of a data broadcasting screen 91 and a data broadcasting screen 92 as transition destinations for a data broadcasting screen 81, and describes the URL of a data broadcasting screen 101 as a transition destination for the data broadcasting screen 91.

In this case, according to the automatic transition mode process of FIG. 12, for example, the data broadcasting screen 81 is displayed in a first step, the display object makes a transition from the data broadcasting screen 81 to the data broadcasting screen 91 in a second step, and the display object makes a transition from the data broadcasting screen 91 to the data broadcasting screen 101 in a third step.

In this case, because there is no transition destination for the data broadcasting screen 101, a focus item within the data broadcasting screen 101 makes transition in a fourth step. The display object makes a transition from the data broadcasting screen 101 to the data broadcasting screen 91 as a transition source of the data broadcasting screen 101. Then, because the transition to the data broadcasting screen 101 as a transition destination for the data broadcasting screen 91 has already been made, and there is no other transition destination for the data broadcasting screen 91, a focus item within the data broadcasting screen 91 makes transition in a sixth step.

The display object then makes a transition from the data broadcasting screen 91 to the data broadcasting screen 81 as a transition source of the data broadcasting screen 91 in a seventh step. Then, because the transition to the data broadcasting screen 91 as a transition destination for the data broadcasting screen 81 has already been made, but a transition to the data broadcasting screen 92 has not yet been made, the display object makes a transition from the data broadcasting screen 81 to the data broadcasting screen 92 in an eighth step.

Then, because there is no transition destination for the data broadcasting screen 92, a focus item within the data broadcasting screen 92 makes transition in a ninth step. The display object makes a transition from the data broadcasting screen 92 to the data broadcasting screen 81 as a transition source of the data broadcasting screen 92 in a tenth step. Then, because the transitions to both of the data broadcasting screen 91 and the data broadcasting screen 92 as transition destinations for the data broadcasting screen 81 have been made, a focus item within the data broadcasting screen 81 makes transition in an eleventh step.

As described above, according to the automatic transition mode process of FIG. 12, the transition of the data broadcasting screen is made preferentially, and thereafter a focus item within the data broadcasting screen being displayed makes transition. As a result, the user can view not only information corresponding to the focus item within the data broadcasting screen currently being displayed but also a data broadcasting screen to which a transition is made according to the focus item.

Incidentally, while the BML browser section 17 in the above description has one of a function of effecting the transition of only the focus item as shown in FIG. 2 and a function of effecting the transition of both the focus item and the data broadcasting screen as shown in FIG. 9, the BML browser section 17 may have both functions. In this case, the television receiver 10 selects which of the two functions to use according to an operation of the input section 18 (FIG. 1) by the user, for example.

### [Description of Computer to which Present Technology is Applied]

Next, at least a part of processes including the processes of the BML browser section 17 among the series of processes described above can be performed by hardware and performed by software. When at least a part of processes including the processes of the BML browser section 17 among the series of processes described above are also performed by software, a program constituting the software is installed onto a general-purpose computer or the like.

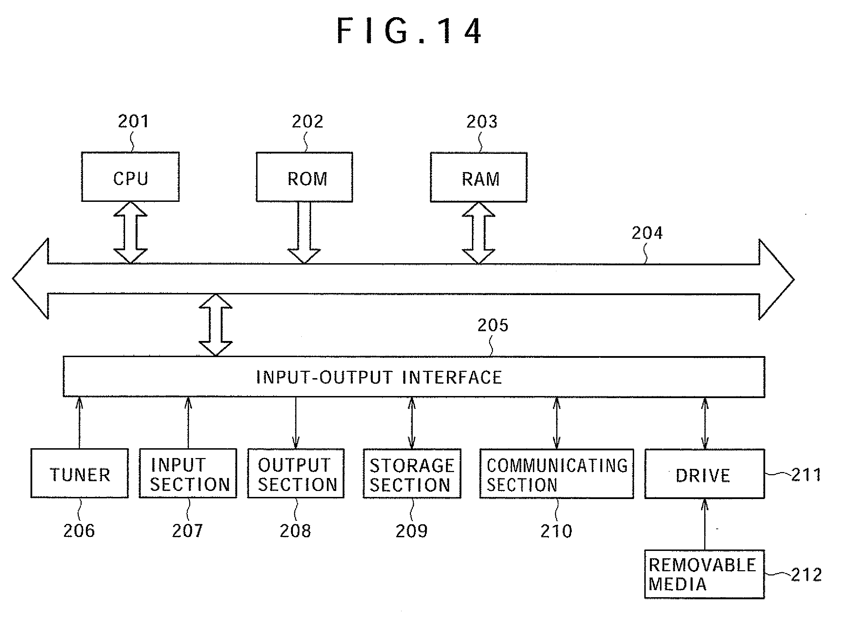

FIG. 14 shows an example of configuration of one embodiment of a computer onto which the program for performing at least a part of processes including the processes of the BML browser section 17 among the series of processes described above is installed.

The program can be recorded in advance in a storage section 209 or a ROM (Read Only Memory) 202 as a recording medium included in the computer.

Alternatively, the program can be stored (recorded) on removable media 212. Such removable media 212 can be provided as so-called packaged software. In this case, the removable media 212 include for example a flexible disk, a CD-ROM (Compact Disk Read Only Memory), an MO (Magneto Optical) disk, a DVD (Digital Versatile Disk), a magnetic disk, and a semiconductor memory.

Incidentally, the program can be not only installed from the removable media 212 as described above onto the computer via a drive 211 but also downloaded to the computer via a communication network or a broadcasting network and installed into the built-in storage section 209. Specifically, the program can be for example transferred from a download site to the computer by radio via an artificial satellite for digital satellite broadcasting or transferred to the computer by wire via a network such as a LAN (Local Area Network), the Internet or the like.

The computer includes a CPU (Central Processing Unit) 201. The CPU 201 is connected with an input-output interface 205 via a bus 204.

When a command is input to the CPU 201 via the input-output interface 205 by an operation of an input section 207 by the user or the like, the CPU 201 executes the program stored in the ROM 202 according to the command. Alternatively, the CPU 201 loads the program stored in the storage section 209 into a RAM (Random Access Memory) 203, and then executes the program.

The CPU 201 thereby performs the processes according to the above-described flowcharts or processes performed by the configurations of the above-described block diagrams. For example, the CPU 201 controls a tuner 206 according to a command input by the input section 207 to extract a digital broadcasting signal of a channel specified to be selected by the user using the input section 207 from a digital broadcasting signal received via an antenna not shown in the figure.

Then, the CPU 201 for example outputs a result of a process from an output section 208 via the input-output interface 205, transmits the result of the process from a communicating section 210 via the input-output interface 205, or records the result of the process in the storage section 209 via the input-output interface 205 as required.

Incidentally, the input section 207 includes a remote control, a keyboard, a mouse, a microphone and the like. The output section 208 includes an LCD (Liquid Crystal Display), a speaker and the like.

In the present specification, the processes performed by the computer according to the program do not necessarily need to be performed in time series in the order described as flowcharts. That is, processes performed by the computer according to the program also include processes performed in parallel or individually (for example parallel processing or processing based on an object).

In addition, the program may be processed by one computer (processor), or may be subjected to distributed processing by a plurality of computers. Further, the program may be transferred to a remote computer and executed by the remote computer.

Embodiments of the present disclosure are not limited to the foregoing embodiments, and various changes can be made without departing from the spirit of the present disclosure.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

The present disclosure contains subject matter related to that disclosed in Japanese Priority Patent Application JP 2010-151949 filed in the Japan Patent Office on July 2, 2010, the entire content of which is hereby incorporated by reference.

## Claims

1. A display controlling device comprising:
a receiving section receiving data of data broadcasting;
a first display controlling section making a focus item as a predetermined item highlighted in a first display area of a display section and making an item other than said focus item normally displayed in said first display area on a basis of said data;
a second display controlling section making information corresponding to said focus item within said first display area displayed in a second display area of said display section on the basis of said data;
a selecting section selecting one of an automatic transition mode in which automatic transition of said focus item is effected and a normal mode in which said focus item is determined according to an operation of a user; and
a determining section determining one of a plurality of said items displayed in said first display area as said focus item;
wherein when said automatic transition mode is selected by said selecting section, said determining section determines each of the plurality of said items displayed in said first display area as said focus item in order.

2. The display controlling device according to claim 1,
wherein said data includes display position data as data indicating display positions of said items, and
said determining section determines each of the plurality of said items displayed in said first display area as said focus item in order of the display positions on a basis of the display position data.

3. The display controlling device according to claim 1,
wherein said data includes correspondence data as data associating an operation of said user with an item determined as said focus item according to the operation, and
said determining section determines an item included in said correspondence data among the plurality of said items displayed in said first display area as said focus item in order.

4. The display controlling device according to claim 1,
wherein said data includes screen identifying data as data for identifying a screen set as a display object when said item is determined as said focus item and item data as data on display of an item displayed in said first display area of each screen,
when said automatic transition mode is selected by said selecting section, on a basis of screen identifying data of an item displayed in said first display area of a screen being displayed, said determining section determines a screen identified by the screen identifying data as a new display object screen, and
on a basis of said item data of said new display object screen determined by said determining section and said focus item determined by said determining section, said first display controlling section makes said focus item highlighted in said first display area and makes an item other than said focus item normally displayed in said first display area.

5. The display controlling device according to claim 4,
wherein when said automatic transition mode is selected by said selecting section, said determining section determines each of the plurality of said items displayed in said first display area of the screen displayed in said display section as said focus item in order, and then determines said new display object screen.

6. The display controlling device according to claim 4,
wherein when said automatic transition mode is selected by said selecting section, said determining section determines each screen corresponding to screen identifying data of an item displayed in said first display area of said screen being displayed as said new display object screen in order, and then determines each of the plurality of said items displayed in said first display area of the screen being displayed as said focus item in order.

7. The display controlling device according to claim 1,
wherein when said automatic transition mode is selected by said selecting section, said determining section determines each of the plurality of said items displayed in said first display area as said focus item in order at each predetermined time.

8. The display controlling device according to claim 1,
wherein said data is data described in Broadcast Markup Language.

9. A display controlling method to be executed by a display controlling device receiving data of data broadcasting, comprising:
making a focus item as a predetermined item highlighted in a first display area of a display section and making an item other than said focus item normally displayed in said first display area on a basis of said data;
making information corresponding to said focus item within said first display area displayed in a second display area of said display section on the basis of said data;
selecting one of an automatic transition mode in which automatic transition of said focus item is effected and a normal mode in which said focus item is determined according to an operation of a user; and
determining one of a plurality of said items displayed in said first display area as said focus item;
wherein when said automatic transition mode is selected, each of the plurality of said items displayed in said first display area is determined as said focus item in order.

10. A program for making a computer perform a process comprising:
making a focus item as a predetermined item highlighted in a first display area of a display section and making an item other than said focus item normally displayed in said first display area on a basis of data of data broadcasting;
making information corresponding to said focus item within said first display area displayed in a second display area of said display section on the basis of said data;
selecting one of an automatic transition mode in which automatic transition of said focus item is effected and a normal mode in which said focus item is determined according to an operation of a user; and
determining one of a plurality of said items displayed in said first display area as said focus item;
wherein when said automatic transition mode is selected, each of the plurality of said items displayed in said first display area is determined as said focus item in order.
